# EUROPÄISCHE PATENTSCHRIFT

(11) **EP 0 688 988 B1**
(45) Veröffentlichungstag und Bekanntmachung des Hinweises auf die Patenterteilung: **20.01.1999**
(21) Anmeldenummer: 95109513.2
(22) Anmeldetag: 20.06.1995
(51) Int. Cl.: F16K 23/00

(54) **Nachtropffreies Ventil**
Dripfree valve
Valve anti-gouttes

(30) Priorität: 20.06.1994 DE 9409973 U
(43) Veröffentlichungstag der Anmeldung: 27.12.1995
(73) Patentinhaber: LOCTITE DEUTSCHLAND GmbH, 81925 München (DE)
(72) Erfinder: Litzel, Rolf, Dr., D-83707 Bad Wiessee (DE)
(74) Vertreter: Abitz, Walter, Dr.-Ing.

(56) Entgegenhaltungen:
- US-A- 2 605 026
- US-A- 4 003 398
- US-A- 4 454 967
- US-A- 4 877 160
- US-A- 5 100 027

## Beschreibung

Die Erfindung betrifft ein nachtropffreies Ventil mit einem nachgiebigen Element in einem Durchflußkanal, das erst bei Erreichen eines bestimmten Flüssigkeitsdruckes den Durchflußkanal freigibt, und mit mindestens einem elastischen Körper, der stromabwärts von dem Rückschlagventil angeordnet ist.

Ein solches Ventil ist aus US-A-4,877,160 bekannt. Der elastische Körper ist dabei ein flexibles Formteil, das eine Ausgabedüse bildet, die im Normalzustand geschlossen ist. Bei einer Verringerung des Flüssigkeitsdruckes schließt zunächst das Rückschlagventil. Das Rückschlagventil ist kolbenartig ausgebildet und erzeugt dadurch einen Unterdruck, der ein schnelles und wirkungsvolles Schließen der flexiblen Auslaufdüse bewirkt. Das Ventil ist zur Ausgabe von Fruchtjoghurt und ähnlichen Lebensmitteln mit festen oder halbfesten Bestandteilen vorgesehen.

Aus US-A-4,454,967 ist ein nachtropffreies Ventil bekannt, bei dem ein flexibler Schlauch zwischen zwei elastischen Körpern zusammengedrückt und geschlossen wird. Bei einem bestimmten Flüssigkeitsdruck wird die von den elastischen Körpern ausgeübte Kraft überwunden, so daß Flüssigkeit aus dem Ventil ausgegeben wird.

Aus DE-C-39 01 032 ist ein Ventil, insbesondere für eine Ölzerstäuberdüse eines Ölbrenners bekannt, bei der sich im Inneren einer Ventilkammer ein federbeaufschlagter Verschlußkörper befindet. Der Verschlußkörper gibt erst bei Erreichen eines bestimmten Soll-Druckes den Durchflußkanal frei.

Aus DE-U-81 30 642 ist ein Dosierventil, insbesondere zur Abgabe viskoser Flüssigkeiten, bekannt, bei dem ein Nachtropfen dadurch verhindert wird, daß ein rohrartiger Stößel in dem Durchflußkanal verschiebbar angeordnet ist und an seinem Ende ein elastisches Formteil als Dichtungselement trägt, das im geschlossenen Zustand des Ventils gegen den Rand einer Auslauföffnung anliegt. Durch das geringe Volumen des Raumes zwischen dem Rand der Auslauföffnung und dem Dichtungselement wird ein Nachtropfen des Ventils nach dem Schließen vermieden. Zum Öffnen des Ventils wird der Stößel angehoben, z.B. durch einen Elektromagneten.

Der Erfindung liegt die Aufgabe zugrunde, ein nachtropffreies Ventil zu schaffen, das für Flüssigkeiten unterschiedlicher Viskositätswerte und insbesondere für mittel- und hochviskose Flüssigkeiten, z.B. Klebstoffe, geeignet ist.

Erfindungsgemäß wird diese Aufgabe dadurch gelöst, daß der mindestens eine elastische Körper innerhalb des Durchflußkanals angeordnet ist, daß er bei Druckerhöhung in der Flüssigkeit sein Volumen verringert und dadurch den Durchflußkanal freigibt, daß er bei Druckverminderung der Flüssigkeitsströmung sein Volumen vergrößert und bei Unterschreiten eines bestimmten Druckwertes den Durchflußkanal schließt und daß er dabei den Durchflußkanal schließt, bevor das Rückschlagventil schließt.

Vorzugsweise sind zwei elastische Körper in dem Durchflußkanal angeordnet, die durch den Flüssigkeitsdruck auseinandergedrückt werden. Die beiden elastischen Körper können dabei gegeneinander vorgespannt sein. Die elastischen Körper sind im allgemeinen parallel zueinander und zur Strömungsrichtung angeordnete Zylinder- oder Schlauchstücke aus einem Elastomer.

Die elastischen Körper bewirken bei einer Volumenstromerhöhung und entsprechender Erhöhung des Flüssigkeitsdruckes ein integrales Verhalten. Bei Volumenstromverminderung und Druckentspannung ergibt sich durch Rückkopplung ein differenzielles Verhalten des Ventils und dadurch ein schnelles, tropffreies Schließen.

Strömungsaufwärts von den elastischen Körpern ist das Rückschlagventil angeordnet, das bei Überschreiten eines bestimmten Flüssigkeitsdruckes den Durchflußkanal freigibt. Beim Schließen des Ventils dehnen sich zunächst die beiden elastischen Körper aus. Dadurch wird das Volumen zwischen den elastischen Körpern und dem Rückschlagventil verringert. Diese Volumenverringerung hat eine Verringerung des an dem Rückschlagventil anliegenden Differenzdruckes zur Folge, wodurch wiederum das Rückschlagventil schneller schließt. Umgekehrt hat das Vorhandensein des Rückschlagventils auch zur Folge, daß sich die elastischen Körper schneller vergrößern und das Ventil schließen. Beim Durchströmen des Rückschlagventils findet ein bestimmter Druckabfall statt, so daß an dem elastischen Körper nicht der volle Druck anliegt. Dies ermöglicht es den beiden elastischen Körpern, schneller zu schließen. Voraussetzung für diese gegenseitige Unterstützung des Rückschlagventils und der beiden elastischen Körper ist, daß sie bei etwa dem gleichen Druckwert schließen, wobei die beiden elastischen Körper vor dem Rückschlagventil schließen.

Die Federkonstanten der Schraubendruckfeder des Rückschlagventils und der elastischen Körper brauchen nicht übereinzustimmen und brauchen deshalb auch nicht linear zu sein.

Das erfindungsgemäße Ventil eignet sich insbesondere als Auslaßventil von Klebstoff oder Dichtungsmassen-Kartuschen, die in Dosierpistolen eingesetzt werden. Die Kartusche ist als ein Zylinder ausgebildet, in dem ein Kolben verschiebbar ist. Durch einen Druckluftanschluß und ein handbetätigtes Ventil wird von der Rückseite ein pneumatischer Druck auf den Kolben aufgebracht, der dadurch den Klebstoff oder die Dichtungsmasse aus dem Auslaßventil treibt. Beim Entspannen des handbetätigten Ventils wird die Dosierpistole entlüftet. Der pneumatische Druck wird dabei sehr schnell abgebaut, während der Druck innerhalb des Klebstoffes oder der Dichtungsmasse relativ langsam abgebaut wird. Trotz des langsamen Abbaus des Druckes innerhalb des Klebstoffes oder der Dichtungsmasse wird durch das erfindungsgemäße Ventil eine sofortige Unterbrechung der Ausgabe des Klebstoffes oder der Dichtungsmasse erreicht und wird insbesondere ein Nachtropfen vermieden. Strömungsaufwärts des Rückschlagventils ist dabei kein weiteres Absperrorgan innerhalb des auszugebenden Fluids angeordnet. Das erfindungsgemäße Ventil ist somit unmittelbar mit der Fluidquelle verbunden.

Ein weiterer Vorteil des erfindungsgemäßen Ventils besteht darin, daß es unabhängig von der Zufuhr einer Hilfsenergie ist, daß es einfach aufgebaut ist und nicht anfällig für Funktionsstörungen ist. Die Fertigungskosten sind äußerst niedrig.

Ein Ausführungsbeispiel der Erfindung wird nachfolgend anhand der Zeichnung erläutert. Es zeigen:
- Fig. 1 und 2: das Ventil im Längsschnitt bzw. im Querschnitt im geschlossenen Zustand und
- Fig. 3 und 4: das Ventil im Längsschnitt bzw. im Querschnitt im offenen Zustand.

Wie in der Zeichnung dargestellt, weist das Ventil einen rohrförmigen Körper 1 mit einem Durchflußkanal 2 auf. Auf das Ende des rohrförmigen Körpers 1 ist eine Spitze 3 aufgeschraubt, die einen Auslaßkanal 4 aufweist, der axial mit dem Durchflußkanal 2 fluchtet, jedoch von wesentlich kleinerem Querschnitt ist.

Das auslaßseitige Ende des Durchflußkanals 2 ist in einer konischen Stufe 5 zu einer zylindrischen Kammer 6 erweitert. Das einlaßseitige Ende des Auslaßkanals 4 in der Spitze 3 ist zylindrisch erweitert und bildet einen Sitz 7 für eine Schraubendruckfeder, die eine Kugel 9 gegen die konische Stufe 5 am Ende des Durchflußkanals 2 drückt. Die Schraubendruckfeder 8, die Kugel 9 und die konische Stufe 5 bilden damit zusammen ein Rückschlagventil 13, das bei einem von den Kennwerten der Schraubendruckfeder 8 und der Geometrie der Kugel 9 und der konischen Stufe 5 abhängigen Flüssigkeitsdruck öffnet.

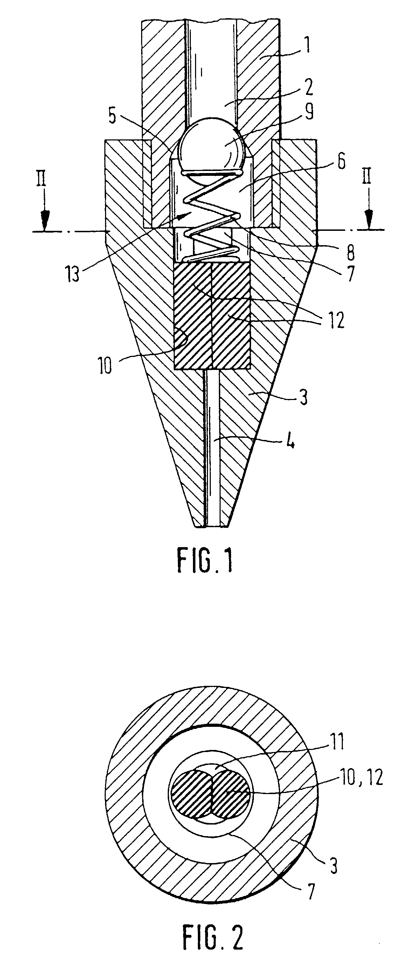

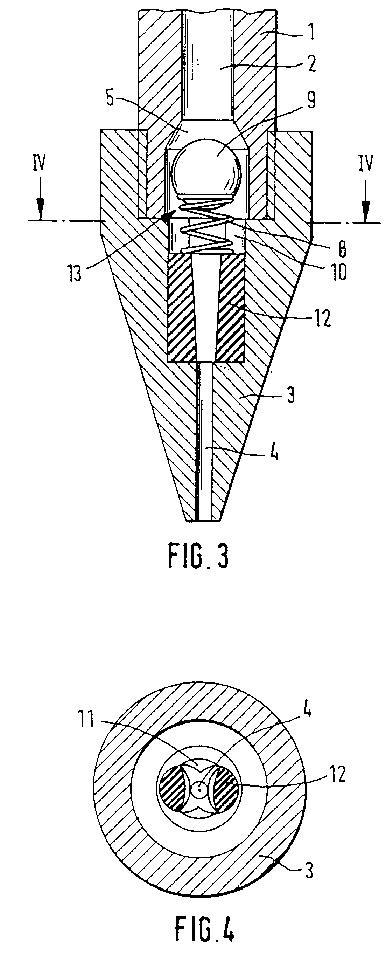

In der Spitze 3 sind noch zwei zylindrische Aufnahmekammern 10 eingearbeitet, die eine deutlich größere Tiefe als der Sitz 7 haben. Im Querschnitt betrachtet überlappen sich die zylindrischen Kammern 10 etwas und liegen symmetrisch zur Achse des Auslaßkanals 4. Der Durchmesser und das Ausmaß der Überlappung der Kammern 10 ist so gewählt, daß am Boden des Sitzes 7 noch eine ausreichende Fläche 11 zur Abstützung der Schraubendruckfeder 8 verbleibt. In den Figuren 2 und 4 sind die Flächen 11 erkennbar. Es handelt sich hierbei um Dreiecksflächen mit zwei konkaven und einer längeren, konvexen Seite. Die Kammern 10 werden unterhalb des Sitzes 7 durch zylindrische Elastomerkörper 12 ausgefüllt. Vorzugsweise berühren sich die Elastomerkörper an der Grenzfläche, an der die beiden Kammern 10 verschmelzen und drücken an dieser Grenzfläche gegeneinander, so daß sie vorgespannt sind. Die Schraubendruckfeder 8 hält dabei die Elastomerkörper 12 in den Kammern 10.

Die beiden vorgespannt aneinanderliegenden Elastomerkörper 12 schließen den Auslaßkanal 4, obwohl die Flüssigkeit im Raum zwischen der Kugel 9 und der Schraubendruckfeder 8 nicht zu Null entspannt ist. Dieser Raum wird dabei von den Elastomerkörpern 12 verkleinert, wodurch die Druckdifferenz an der Kugel 9 kleiner wird und schneller von der Kraft der Schraubendruckfeder 8 überwunden werden kann, so daß das Rückschlagventil 13 schneller schließt. Die Elastomerkörper 12 verändern das Volumen für die Flüssigkeit druckabhängig in der Weise, daß das Ventil regelungstechnisch, aufgrund des integralen Anteils der Regelstrecke, mit differenziellem Verhalten schließt.

Durch die Rückwirkung der Elastomerkörper 12 wird die Funktion des Rückschlagventils 13 derart verbessert, daß ein fehlerfreier Fließvorgang der Flüssigkeit nach Fließbeginn erzielt wird und die unterstützende Schließfunktion verbessert wird.

## Patentansprüche

1. Nachtropffreies Ventil für die Abgabe von Flüssigkeit, mit einem Durchflußkanal (2, 4), aus dessen Ende die Flüssigkeit austritt, mit einem Rückschlagventil (13), das bei Überschreiten eines bestimmten Flüssigkeitsdifferenzdruckes den Durchflußkanal (2) freigibt, und mit mindestens einem elastischen Körper, der stromabwärts von dem Rückschlagventil (13) angeordnet ist, dadurch gekennzeichnet, daß der mindestens eine elastische Körper (12) innerhalb des Durchflußkanals (2) angeordnet ist, daß er bei Druckerhöhung in der Flüssigkeit sein Volumen verringert und dadurch den Durchflußkanal (2) freigibt, daß er bei Druckverminderung der Flüssigkeitsströmung sein Volumen vergrößert und bei Unterschreiten eines bestimmten Druckwertes den Durchflußkanal (2) schließt und daß er dabei den Durchflußkanal (2) schließt, bevor das Rückschlagventil (13) schließt.

2. Ventil nach Anspruch 1, dadurch gekennzeichnet, daß durch die bei Druckverminderung stattfindende Vergrößerung des Volumens des mindestens einen elastischen Körpers (2) das Volumen zwischen diesen Körper (12) und dem Rückschlagventil (13) verringert wird, wodurch das Rückschlagventil (13) schneller schließt.

3. Ventil nach Anspruch 1 oder 2, dadurch gekennzeichnet, daß zwei elastische Körper (12) in dem Durchflußkanal (2) angeordnet sind und durch die Flüssigkeitsströmung auseinandergedrückt werden.

4. Ventil nach Anspruch 3, dadurch gekennzeichnet, daß die beiden elastischen Körper (12) gegeneinander vorgespannt sind.

5. Ventil nach einem der Ansprüche 1 bis 4, dadurch gekennzeichnet, daß die elastischen Körper (12) parallel zueinander und zur Strömungsrichtung angeordnete Zylinderstücke aus einem Elastomer sind.

6. Ventil nach einem der Ansprüche 1 bis 5, dadurch gekennzeichnet, daß das Rückschlagventil (13) eine Schraubendruckfeder (8) und eine Kugel (9) aufweist.

7. Ventil nach Anspruch 6, dadurch gekennzeichnet, daß die Schraubendruckfeder (8) die Kugel (9) gegen eine konische Stufe (5) des Durchflußkanals (2) drückt.

## Claims

1. Non-drip valve for the discharge of liquid comprising a through-flow channel (2,4) from whose end the liquid emerges, a non-return valve (13), which frees the through-flow channel (2) when a certain liquid pressure differential is exceeded, and at least one elastic member which is arranged downstream of the non-return valve (13), characterized in that the at least one elastic member (12) is arranged within the through-flow channel (2), that it reduces its volume when the pressure in the liquid increases and thereby frees the through-flow channel (2), that it enlarges its volume when the pressure of the liquid flow decreases and closes the through-flow channel (2) when the pressure of the liquid flow falls below a certain pressure value and that it closes the through-flow channel (2) before the non-return valve (13) closes.

2. Valve according to claim 1, characterized in that the volume between the at least one elastic member (12) and the non-return valve (13) will be reduced by the enlargement of the volume of the at least one elastic member (12) taking place when the pressure decreases, whereby the non-return valve (13) closes more quickly.

3. Valve according to claim 1 or 2, characterized in that two elastic members (12) are arranged in the through-flow channel (2) and are pressed apart by the liquid flow.

4. Valve according to claim 3, characterized in that the two elastic members (12) are prestressed towards each other.

5. Valve according to one of claims 1 to 4, characterized in that the elastic members (12) are cylinder sections, made from an elastomer, arranged parallel to each other and to the direction of flow.

6. Valve according to one of claims 1 to 5, characterized in that the non-return valve (13) includes a helical pressure spring (8) and a sphere (9).

7. Valve according to claim 6, characterized in that the helical pressure spring (8) presses the sphere (9) against a conical stage (5) of the through-flow channel (2).

## Revendications

1. Soupape ne gouttant pas pour la délivrance de liquide, comportant un canal d'écoulement (2, 4), de l'extrémité duquel sort le liquide, un clapet anti-retour (13), qui libère le canal d'écoulement lorsque la pression différentielle du liquide dépasse une valeur déterminée, et au moins un corps élastique, placé en aval du clapet anti-retour (13), caractérisée en ce que le au moins un corps élastique (12) est placé à l'intérieur du canal d'écoulement (2), en ce qu'il diminue de volume lorsque la pression augmente dans le liquide et libère ainsi le canal d'écoulement (2), en ce qu'il augmente de volume lorsque la pression de l'écoulement de liquide diminue et ferme le canal d'écoulement (2) lorsque la pression devient inférieure à une valeur déterminée et en ce qu'il ferme le canal d'écoulement (2) avant que le clapet anti-retour (13) se ferme.

2. Soupape selon la revendication 1, caractérisée en ce que, par l'augmentation du volume du au moins un corps élastique (2) qui se produit lors d'une diminution de pression, le volume entre ce corps (12) et le clapet anti-retour (13) diminue, ce qui provoque la fermeture plus rapide du clapet anti-retour (13).

3. Soupape selon la revendication 1 ou 2, caractérisée en ce que deux corps élastiques (12) sont placés dans le canal d'écoulement (2) et sont écartés l'un de l'autre par l'écoulement du liquide.

4. Soupape selon la revendication 3, caractérisée en ce que les deux corps élastiques sont précontraints l'un contre l'autre.

5. Soupape selon l'une des revendications 1 à 4, caractérisée en ce que les corps élastiques (12) sont des pièces cylindriques en élastomère disposées parallèlement l'une à l'autre et à la direction de l'écoulement.

6. Soupape selon l'une des revendications 1 à 5, caractérisée en ce que le clapet anti-retour (13) comporte un ressort cylindrique de compression (8) et une bille (9).

7. Soupape selon la revendication 6, caractérisée en ce que le ressort cylindrique de compression (8) presse la bille (9) contre un passage conique (5) du canal d'écoulement (2).
